# EUROPÄISCHE PATENTSCHRIFT

(11) **EP 1 359 804 B1**
(45) Veröffentlichungstag und Bekanntmachung des Hinweises auf die Patenterteilung: **05.04.2006**
(21) Anmeldenummer: 01902379.5
(22) Anmeldetag: 01.02.2001
(51) Int. Cl.: A22C 13/00

(54) **FÜNFSCHICHTIGE, BIAXIAL ERSTRECKTE, SIEGELFÄHIGE SCHLAUCHFOLIE ZUR VERPACKUNG UND UMHÜLLUNG VON PASTÖSEN LEBENSMITTELN, FLEISCH UND FLEISCH MIT KNOCHEN UND IHRE VERWENDUNG**
FIVE-LAYERED, BIAXIALLY-ORIENTED, SEALABLE TUBULAR FILM FOR THE PACKAGING AND WRAPPING OF PASTE-LIKE FOODSTUFFS, MEAT AND MEAT WITH BONES AND USE THEREOF
FILM TUBULAIRE A CINQ COUCHES, ETIRE BIAXIALEMENT, SOUDABLE, UTILISE POUR EMBALLER ET ENVELOPPER DES ALIMENTS PATEUX, DE LA VIANDE ET DE LA VIANDE AVEC OS ET SON UTILISATION

(43) Veröffentlichungstag der Anmeldung: 12.11.2003
(73) Patentinhaber: Naturin GmbH & Co, 69469 Weinheim (DE)
(72) Erfinder: GRUND, Hartmut, 67166 Otterstadt (DE); LANG, Horst, 69469 Weinheim (DE); SCHAUER, Helmut, 68542 Heddesheim (DE)
(74) Vertreter: Klöpsch, Gerald
(86) Internationale Anmeldenummer: PCT/EP2001/001068
(87) Internationale Veröffentlichungsnummer: WO 2002/060267

(56) Entgegenhaltungen:
- EP-A- 0 288 972
- EP-A- 0 530 549
- EP-A- 0 658 310
- EP-A- 0 974 452
- EP-A- 0 980 752
- EP-A- 0 981 963
- WO-A-97/12758
- GB-A- 2 316 906

## Beschreibung

Die Erfindung betrifft eine fünfschichtige, biaxial verstreckte, schrumpffähige, siegelfähige Schlauchfolie mit verbesserter Sauerstoffbaniere sowie ihre Verwendung zur Verpackung und Umhüllung von pastösen Lebensmitteln, Fleisch und Fleisch mit Knochen.

Aus der DE 43 39 337 C2 ist bereits eine fünfschichtige Schlauchfolie zur Verpackung und Umhüllung von pastösen Lebensmitteln, insbesondere Wursthülle, auf Basis von Polyamid bekannt. Diese Schlauchfolie besteht aus einer inneren und einer äußeren Schicht aus dem gleichen Polyamidmaterial, einer mittleren Polyolefinschicht sowie aus zwei aus dem gleichen Material bestehenden Haftvermittlerschichten zwischen jeweils innerer Schicht und Mittelschicht und Mittelschicht und äußerer Schicht. Innen- und Außenschicht bestehen aus wenigstens einem aliphatischen Polyamid und/oder wenigstens einem aliphatischen Copolyamid sowie wenigstens einem teilaromatischen Polyamid und/oder wenigstens einem teilaromatischen Copolyamid, wobei der Anteil des teilaromatischen Polyamids und/oder Copolyamids 5 bis 60 Gew.-%, bezogen auf das Gesamtgewicht der Polymermischung aus teilaromatischen und aliphatischen Polyamiden und Copolyamiden beträgt. Einer solchen Schlauchfolie, die durch Coextrusion hergestellt wird, wird durch biaxiales Verstrecken und Thermofixieren ein kontrolliertes Schrumpfvermögen verliehen. Eine solche Schlauchfolie ist hinsichtlich anwendungstechnischer Eigenschaften, die für die Umhüllung bzw. Verpackung von Fleisch, insbesondere Fleisch mit Knochen, wichtig sind, verbesserungsbedürftig. Bei Fleisch mit Knochen besteht die Gefahr, daß hervorstehende Knochen die verpackte Folie nach dem Aufschrumpfen der Verpackungsfolie auf das Verpackungsgut durchstoßen, weil die Durchstoßfestigkeit zu gering ist. Ferner sollten derartige Schlauchfolien zur Verpackung und Umhüllung von Fleisch oder Fleisch mit Knochen und pastösen Lebensmitteln auch auf einfache Weise durch Heißsiegeln verschlossen werden können. Bei aus derartigen Schlauchfolien hergestellten Beuteln kommt es entscheidend auf die Festigkeit der Siegelnaht an. Wenn zum Beispiel aus einem Füllrohr ein Stück Schinken oder Fleisch in einen am unteren Ende durch eine Heißsiegelnaht verschlossenen Beutel aus einer Kunststoffolie fällt, treten in Abhängigkeit vom Gewicht erhebliche Belastungen durch den Fall des Verpackungsguts in den Beutel auf, die dazu führen können, daß die Heißsiegelnaht reißt und der Beutel sich daher am unteren Ende wieder vollständig öffnet. Auch beim späteren Vakuumieren und Schrumpfen der Beutel wird die Heißsiegelnaht extremen Belastungen ausgesetzt. Auch der Transport und die Lagerung der gefüllten Beutel stellt hohe Anforderungen an die Durchstoßfestigkeit der Folie und die Siegelnahtfestigkeit.

Aufgabe der vorliegenden Erfindung ist es daher, eine biaxial verstreckte, schrumpffähige, siegelfähige Schlauchfolie zur Verpackung und Umhüllung von pastösen Lebensmitteln, Fleisch und Fleisch mit Knochen bereitzustellen, die neben den an eine solche Verpackungsfolie zu stellenden Anforderungen wie geringe Wasserdampf- und Sauerstoffdurchlässigkeit eine hohe Durchstoßfestigkeit der Schlauchfolie einerseits und eine hohe Festigkeit der Siegelnaht andererseits aufweist.

Aufgabe der Erfindung ist ferner eine weitere Verbesserung der Verpackungsfolie hinsichtlich der Undurchlässigkeit für Sauerstoff.

Diese Aufgabe wird erfindungsgemäß durch eine fünfschichtige, biaxial verstreckte, schrumpffähige, siegelfähige Schlauchfolie mit den kennzeichnenden Merkmalen von Anspruch 1 gelöst.

Die Innenschicht enthält wenigstens ein siegelfähiges Copolyamid. Solche an sich bekannten Copolyamide werden aus Monomeren hergestellt, die ausgewählt sind aus der Gruppe Caprolactam, , Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin. Die Wandstärke der Innenschicht liegt zwischen 5 und 16 µm.

Überraschenderweise wird durch den Zusatz eines amorphen Polyamids und/oder eines Homopolyamids und/oder eines modifizierten Polyolefins zu einem Copolyamid in der Innenschicht die Siegelnahtfestigkeit gegenüber reinem Copolyamid signifikant erhöht bzw.werden hohe Siegelnahtfestigkeiten bereits bei niedrigeren Siegeltemperaturen erreicht. Damit weist die erfindungsgemäße Folie erhebliche anwendungstechnische Vorteile auf.

Als amorphe Polyamide für die Innenschicht werden Polyamide verwendet, deren Glasumwandlungstemperatur im trockenen Zustand zwischen 50 und 200 °C liegt. Beispiele hierfür sind Polyamid 6I/6T, Polyamid 6-3-T und Polyamid 6I.

Als Homopolyamide für die Innenschicht werden Polyamide verwendet, die aus den gleichen Monomeren hergestellt werden können wie die bereits oben beschriebenen Copolyamide. Die Homopolyamide können sowohl aliphatischen als auch teilweise aromatischen Charakter haben.

Die modifizierten Polyolefine sind Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atomen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten.

Der Hauptbestandteil der Innenschicht ist ein siegelbares Copolyamid oder eine Mischung siegelbarer Copolyamide, wobei dieser Hauptbestandteil in Mengen zwischen 50 und 95 Gew.% vorliegt. Die weiteren Komponenten, amorphes Polyamid und/oder Homopolyamid und/oder modifiziertes Polyolefin können in Mengen von jeweils 1 bis 30 Gew.%, bevorzugt 5 bis 25 Gew.%, bezogen auf die gesamte Innenschicht, dem Hauptbestandteil zugemischt sein.

Bei der Schicht aus modifiziertem Polyolefin handelt es sich um Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere aufPolyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atomen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten. Die Wandstärke der Schicht aus modifiziertem Polyolefin liegt zwischen 5 und 30 µm.

Zusätzlich wird durch eine Sauerstoffsperrschicht aus einem Ethylen-Vinylalkohol-Copolymer zwischen Außenschicht und Mittelschicht und die Verwendung einer Mittelschicht auf Polyamidbasis die Folie in ihrer Sauerstoffundurchlässigkeit drastisch verbessert.

Als Mittelschicht dient in der erfindungsgemäßen Hülle eine Schicht aus wenigstens einem Homopolyamid und/oder wenigstens einem Copolyamid und/oder wenigstens einem Copolymeren von Ethylen mit Vinylalkohol und/oder einem modifizierten Polyolefin. Die Wandstärke dieser Schicht liegt zwischen 10 und 35 µm.

Geeignete Homo- und Copolyamide sind bekannt und können aus entsprechenden Monomeren wie z.B. Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin, hergestellt werden.

Bevorzugte Homo- und Copolyamide sind Polyamid 6, Polyamid 12, Polyamid 610, Polyamid 612, Polyamid MXD6, Polyamid 6/66, Polyamid 6/12, Polyamid 6I/6T.

Die modifizierten Polyolefine, die in der Mittelschicht enthalten sein können, sind Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atomen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten.

Copolymere von Ethylen mit Vinylalkohol, die in der Mittelschicht enthalten sein können, werden durch vollständige Verseifung von Copolymeren des Ethylens mit Vinylacetat hergestellt. Im allgemeinen liegt der Ethylen-Anteil in den Ethylen-Vinylalkohol-Copolymeren zwischen 27 und 48 Mol%. Für den Zusatz in der Mittelschicht werden Ethylen-Vinylalkohol-Copolymere bevorzugt, deren Ethylen-Anteil zwischen 27 und 38 Mol% beträgt.

Der Hauptbestandteil der Mittelschicht sind Homopolyamide, allein oder in Mischung, Copolyamide, allein oder in Mischung, oder Mischungen aus Homo- und Copolyamiden, wobei dieser Hauptbestandteil in Mengen zwischen 50 und 100 Gew.% vorliegt. Bei Vorliegen weiterer Komponenten wie Copolymeren von Ethylen mit Vinylalkohol und/oder modifizierten Polyolefinen sind diese in Mengen von jeweils 0 bis 50 Gew.%, bezogen auf die gesamte Mittelschicht, dem Hauptbestandteil zugemischt.

Sodann folgt eine Schicht aus einem Ethylen-Vinylalkohol-Copolymeren. Hierbei handelt es sich um die gleichen Copolymere wie sie auch in der Mittelschicht enthalten sein können, wobei hier jedoch der bevorzugte Ethylen-Anteil zwischen 34 und 48 Mol% beträgt. Den Ethylen-Vinylalkohol-Copolymeren dieser Schicht können Homo- oder Copolyamide und /oder modifizierte Polyethylene zugesetzt werden. Die Wandstärke dieser Schicht liegt zwischen 3 und 10 µm.

Geeignete Homo- und Copolyamide sind bekannt und können aus entsprechenden Monomeren wie z.B. Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin, hergestellt werden.

Bevorzugte Homo- und Copolyamide sind Polyamid 6, Polyamid 12, Polyamid 610, Polyamid 612, Polyamid MXD6, Polyamid 6/66, Polyamid 6/12, Polyamid 6I/6T.

Die modifizierten Polyolefine, sind Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atorizen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten.

Der Hauptbestandteil dieser Schicht ist ein Ethylenvinylalkohol-Copolymer in einer Menge von 60 bis 100 Gew.%. Bei Vorliegen weiterer Komponenten wie Homo- und Copolyamiden und modifizierten Polyolefinen können diese in Mengen von jeweils 0 bis 40 Gew.% bezogen auf diese gesamte Schicht dem Hauptbestandteil zugemischt sein.

Die Außenschicht besteht aus Polyolefinen oder aus modifizierten Polyolefinen. Auch beliebige Mischungen dieser Komponenten sind als Außenschicht einsetzbar. Die Wandstärke dieser Schicht liegt zwischen 3 und 15 µm.

Als Polyolefine werden bevorzugt Homopolymere von Ethylen oder Propylen und/oder Copolymere von linearen Alphaolefinen mit 2 bis 8 C-Atomen eingesetzt. Vorzugsweise wird für die Mittelschicht lineares Polyethylen niedriger Dichte, Polyethylen hoher Dichte, Polypropylen-Homopolymerisat, Polypropylen-Block- und Polypropylen-Random-Copolymerisat verwendet.

Bei den modifizierten Polyolefinen handelt es sich um Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atomen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten.

Daneben können in der Schlauchfolie übliche Hilfsstoffe, zum Beispiel Antiblockmittel, Stabilisatoren, Antistatika oder Gleitmittel enthalten sein. Diese Hilfsstoffe werden gewöhnlich in Mengen von 0,1 bis 5 Gew.% zugesetzt. Weiterhin kann die Folie durch Zugabe von Pigmenten oder Pigmentmischungen eingefärbt werden.

Die erfindungsgemäßen Schlauchfolien werden durch Coextrusion hergestellt, wobei die einzelnen Polymeren für die unterschiedlichen Schichten in fünf Extrudern plastifiziert und homogenisiert und sodann die fünf Schmelzströme entsprechend den gewünschten Einzelwandstärkenverhältnissen durch einen Fünfschichtextrusionskopf zu einem Primärrohr ausgeformt, biaxial verstreckt und thermofixiert werden.

Die erfindungsgemäßen Schlauchfolien haben Gesamtwandstärken von 30 bis 100 µm, bevorzugt 40 bis 80 µm.

Die erfindungsgemäßen Schlauchfolien sind überraschenderweise den Schlauchfolien der DE 43 39 337 C2 sowohl hinsichtlich der Siegelnahtfestigkeit als auch der Durchstoßfestigkeit und der Sauerstoffdurchlässigkeit deutlich überlegen.

Für die Bestimmung der Siegelnahtfestigkeit wurden die jeweiligen Schlauchfolien quer zur Laufrichtung innenseitig mit einem Laborschweißgerät SGPE 20 der Fa. W. Kopp Verpakkungsmaschinen verschweißt. Aus den verschweißten Schlauchfolien wurden 25 mm breite Streifenproben derart entnommen, daß die Schweißnaht quer zur Längsrichtung des Streifens lag. Die Streifenproben wurden auf einer Zugprüfmaschine der Fa. Instron mit einer Abzugsgeschwindigkeit von 500 mm/min bis zum Bruch der Schweißnaht auseinandergezogen. Die dabei erreichte Maximalkraft wird im Folgenden als Siegelnahtfestigkeit bezeichnet.

Als Maß für die Durchstoßfestigkeit wird als Schädigungsarbeit im Durchstoßversuch ermittelt.

Die Bestimmung der Schädigungsarbeit erfolgte in Anlehnung an die DIN 53373, wobei jedoch abweichend zu dieser DIN Norm als Stoßkörper ein gehärteter Zylinderstift Form A mit 3 mm Durchmesser entsprechend DIN EN 28 734 eingesetzt wurde und die Prüfgeschwindigkeit 500 mm/min betrug. Die Schädigungsarbeit ist die bis zum ersten Anriß der Probe verbrauchte Energie.

Die Sauerstoffdurchlässigkeit wurde entsprechend ASTM D3985-81(88) mit einem OX-TRAN 200-H der Fa. Modern Controls Inc. bei 23°C und 50 % relativer Feuchte bestimmt.

Die Schlauchfolie nach DE 43 39 337 C2 (Vergleichsbeispiel 1) konnte bei Siegeltemperaturen von 140 und 200 °C nicht verschweißt werden, während die erfindungsgemäßen Schlauchfolien bereits bei einer Siegeltemperatur von 140 °C eine befriedigende bis gute Siegelnahtfestigkeit erreichten. Bei einer Siegeltemperatur von 200 °C ergeben sich bei den erfindungsgemäßen Schlauchfolien Siegelnahtfestigkeiten, die um mindestens 18 % über denen der Vergleichsbeispiele liegen.

Auch im Durchstoßversuch zeigen die erfindungsgemäßen Schlauchfolien vergleichbare bis deutlich höhere Werte für die Schädigungsarbeit.

Die Erfindung wird durch die nachfolgenden Beispiele näher erläutert:

### Beispiel 1:

Die einzelnen Polymeren für die unterschiedlichen Schichten wurden in fünf Extrudern plastifiziert und homogenisiert. Die fünf Schmelzeströme wurden entsprechend den gewünschten Einzelwandstärkenverhältnissen einem Fünfschichtextrusionskopf zugeführt und zu einem Primärrohr ausgeformt, biaxial verstreckt und thermofixiert. Das Primärrohr hatte einen Durchmesser von 45,5 mm und eine mittlere Gesamtwandstärke von 0,50 mm. Es wurde mit Infrarotstrahlung auf 116 °C aufgeheizt und mit einem Flächenreckverhältnis von 9,2 verstreckt. Der biaxial verstreckte Schlauch wurde thermofixiert, flachgelegt und aufgewickelt. Die mittlere Gesamtwandstärke des Schlauches betrug 55 µm. Die Liegebreite betrug 210 mm.

Der Schichten des fertigen Schlauches bestanden aus den folgenden Polymeren mit den angegebenen Einzelwandstärken:

| | |
|---|---|
| 1. Schicht (Außenschicht): | Mischung aus 40 % Polyethylen (LDPE), Lupolen 1804 H der Fa. BASF AG und 60 % modifiziertes Polyethylen, Admer NF 478 E der Fa. Mitsui Chemicals Inc., 6 µm |
| 2. Schicht: | Ethylenvinylalkohol-Copolymer, Soarnol AT4406 der Fa Nippon Gohsei, 6 µm |
| 3. Schicht: | Polyamid 6/12, Grilon CR9 der Fa. EMS Chemie, 22 µm |
| 4. Schicht: | Haftvermittler, modifiziertes Polyethylen, Admer NF 478 E der Fa. Mitsui Chemicals Inc., 11 µm |
| 5. Schicht (Innenschicht): | Mischung aus 90 % Polyamid 6/12, Grilon CF6S der Fa. EMS-Chemie und 10 % Polyamid 12, UBE Nylon 3030 B der Fa. UBE Industries Ltd., 10 µm |

Folgende Werte für die Siegelnahtfestigkeit wurden ermittelt:

| | |
|---|---|
| Siegeltemperatur 140°C: | 8 N/25 mm |
| Siegeltemperatur 200°C: | 94 N/25 mm |

Die Schädigungsarbeit betrug 560 mJ.

Die Sauerstoffdurchlässigkeit betrug 6,0 cm³/m²dbar.

### Beispiel 2:

Die einzelnen Polymeren für die unterschiedlichen Schichten wurden in fünf Extrudern plastifiziert und homogenisiert. Die fünf Schmelzeströme wurden entsprechend den gewünschten Einzelwandstärkenverhältnissen einem Fünfschichtextrusionskopf zugeführt und zu einem Primärrohr ausgeformt, biaxial verstreckt und thermofixiert. Das Primärrohr hatte einen Durchmesser von 45,5 mm und eine mittlere Gesamtwandstärke von 0,53 mm. Es wurde mit Infrarotstrahlung auf 108 °C aufgeheizt und mit einem Flächenreckverhältnis von 9,7 verstreckt. Der biaxial verstreckte Schlauch wurde thermofixiert, flachgelegt und aufgewickelt. Die mittlere Gesamtwandstärke des Schlauches betrug 55 µm. Die Liegebreite betrug 208 mm.

Der Schichten des fertigen Schlauches bestanden aus den folgenden Polymeren mit den angegebenen Einzelwandstärken:

| | |
|---|---|
| 1. Schicht (Außenschicht): | Mischung aus 40 % Polyethylen (LDPE), Lupolen 1804 H der Fa. BASF AG und 60 % modifiziertes Polyethylen, Admer NF 478 E der Fa. Mitsui Chemicals Inc., 6 µm |
| 2. Schicht: | Ethylenvinylalkohol-Copolymer, Soarnol AT4406 der Fa Nippon Gohsei, 6 µm |
| 3. Schicht: | Mischung aus 40 % Polyamid 6, Grilon F40 der Fa. EMS Chemie und 50 % Polyamid 6/66, Ultramid C35 der Fa. BASF AG und 10 % Polyamid 6I/6T, Grivory G21 der Fa EMS Chemie, 21 µm |
| 4. Schicht: | Haftvermittler, modifiziertes Polyethylen, Admer NF 478 E der Fa. Mitsui Chemicals Inc., 12 µm |
| 5. Schicht (Innenschicht): | Mischung aus 90 % Polyamid 6/12, Grilon CF6S der Fa. EMS-Chemie und 10 % Ionomerharz, Surlyn 1652 der Fa. Du Pont de Nemours GmbH, 10 µm |

Folgende Werte für die Siegelnahtfestigkeit wurden ermittelt:

| | |
|---|---|
| Siegeltemperatur 140°C: | 73 N/25 mm |
| Siegeltemperatur 200°C: | 94 N/25 mm |

Die Schädigungsarbeit betrug 585 mJ.

Die Sauerstoffdurchlässigkeit betrug 5,2 cm³/m²dbar.

### Beispiel 3:

Die einzelnen Polymeren für die unterschiedlichen Schichten wurden in fünf Extrudern plastifiziert und homogenisiert. Die fünf Schmelzeströme wurden entsprechend den gewünschten Einzelwandstärkenverhältnissen einem Fünfschichtextrusionskopf zugeführt und zu einem Primärrohr ausgeformt, biaxial verstreckt und thermofixiert. Das Primärrohr hatte einen Durchmesser von 45,5 mm und eine mittlere Gesamtwandstärke von 0,52 mm. Es wurde mit Infrarotstrahlung auf 115 °C aufgeheizt und mit einem Flächenreckverhältnis von 9,4 verstreckt. Der biaxial verstreckte Schlauch wurde thermofixiert, flachgelegt und aufgewickelt. Die mittlere Gesamtwandstärke des Schlauches betrug 55 µm. Die Liegebreite betrug 211 mm.

Der Schichten des fertigen Schlauches bestanden aus den folgenden Polymeren mit den angegebenen Einzelwandstärken:

| | |
|---|---|
| 1. Schicht (Außenschicht): | Mischung aus 40 % Polyethylen (LDPE), Lupolen 1804 H der Fa. BASF AG und 60 % modifiziertes Polyethylen, Admer NF 478 E der Fa. Mitsui Chemicals Inc., 6 µm |
| 2. Schicht: | Ethylenvinylalkohol-Copolymer, Soarnol AT4406 der Fa Nippon Gohsei, 6 µm |
| 3. Schicht: | Polyamid 6, Grilon F40 der Fa. EMS Chemie, 21 µm |
| 4. Schicht: | Haftvermittler, modifiziertes Polyethylen, Admer NF 478 E der Fa. Mitsui Chemicals Inc., 12 µm |
| 5. Schicht (Innenschicht): | Mischung aus 85 % Polyamid 6/12, Grilon CF6S der Fa. EMS-Chemie und 5 % Polyamid 6I/6T, Grivory G21 der Fa. EMS-Chemie und 10 % Ionomerharz, Surlyn 1652 der Fa. Du Pont de Nemours GmbH, 10 µm |

Folgende Werte für die Siegelnahtfestigkeit wurden ermittelt:

| | |
|---|---|
| Siegeltemperatur 140°C: | 13 N/25 mm |
| Siegeltemperatur 200°C: | 97 N/25 mm |

Die Schädigungsarbeit betrug 530 mJ.

Die Sauerstoffdurchlässigkeit betrug 6,1 cm³/m²dbar.

### Vergleichsbeispiel 1

Entsprechend DE 43 39 337C2 wurde eine fünfschichtige Schlauchfolie mit folgendem Aufbau hergestellt:

| | |
|---|---|
| 1. Schicht (Außenschicht): | Mischung aus 95 % Polyamid 6, Durethan B40 F der Bayer AG und 5 % Polyamid 6I/6T, Grivory G21 der Fa. EMS-Chemie, 21 µm |
| 2. Schicht: | Haftvermittler, modifiziertes Polyethylen, Admer NF 478E der Fa. Mitsui Chemicals Inc., 5 µm |
| 3. Schicht: | Polyethylen (LLDPE), Dowlex 2049 E der Fa. DOW Chemical Company, 15 µm |
| 4. Schicht: | Haftvermittler (wie 2. Schicht), 5 µm |
| 5. Schicht (Innenschicht): | Mischung aus 95 % Polyamid 6, Durethan B40 F der Bayer AG und 5 % Polyamid 6I/6T, Grivory G21 der Fa. EMS-Chemie, 9 µm |

Folgende Werte für die Siegelnahtfestigkeit wurden ermittelt:

| | |
|---|---|
| Siegeltemperatur 140°C: | nicht verschweißt |
| Siegeltemperatur 200°C: | nicht verschweißt |

Die Schädigungsarbeit betrug 345 mJ.

Die Sauerstoffdurchlässigkeit betrug 20 cm³/m²dbar.

### Vergleichsbeispiel 2

Wie im Beispiel 3 wurde eine fünfschichtige Schlauchfolie hergestellt mit dem Unterschied, daß die fünfte Schicht (Innenschicht) aus reinem Polyamid 6/12, Grilon CF6S der Fa. EMS-Chemie bestand.

Folgende Werte für die Siegelnahtfestigkeit wurden ermittelt:

| | |
|---|---|
| Siegeltemperatur 140°C: | 34 N/25 mm |
| Siegeltemperatur 200°C: | 80 N/25 mm |

Die Schädigungsarbeit betrug 528 mJ.

Die Sauerstoffdurchlässigkeit betrug 6,0 cm³/m²dbar.

## Patentansprüche

1. Fünfschichtige, biaxial verstreckte, schrumpffähige, siegelfähige Schlauchfolie zur Verpackung und Umhüllung von pastösen Lebensmitteln, Fleisch oder Fleisch mit Knochen, **dadurch gekennzeichnet, daß** sie aus einer inneren Schicht aus wenigstens einem Copolyamid und wenigstens einem amorphen Polyamid und/oder wenigstens einem Homopolyamid und/oder wenigstens einem modifizierten Polyolefin, einer Schicht eines modifizierten Polyolefins, einer mittleren Schicht aus wenigstens einem Homopolyamid und/oder wenigstens einem Copolyamid und/oder wenigstens einem Copolymeren von Ethylen mit Vinylalkohol und/oder einem modifizierten Polyolefin, einer Schicht aus wenigstens einem Ethylen-Vinylalkohol-Copolymeren und einer äußeren Schicht aus wenigstens einem Polyolefin und/oder wenigstens einem modifizierten Polyolefin aufgebaut ist.

2. Schlauchfolie nach Anspruch 1, **dadurch gekennzeichnet, daß** die innere Schicht Copolyamide enthält, welche aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

3. Schlauchfolie nach Anspruch 2, **dadurch gekennzeichnet, daß** die Copolyamide in der inneren Schicht in Mengen von 50 bis 95 Gew.% vorliegen.

4. Schlauchfolie nach einem der Ansprüche 1 bis 3, **dadurch gekennzeichnet, daß** die innere Schicht amorphe Polyamide enthält, deren Glasumwandlungstemperatur im trockenen Zustand zwischen 50 und 200 °C liegt.

5. Schlauchfolie nach Anspruch 4, **dadurch gekennzeichnet, daß** die Glasumwandlungstemperatur der amorphen Polyamide bevorzugt zwischen 90 und 160 °C liegt.

6. Schlauchfolie nach einem der Ansprüche 1 bis 5, **dadurch gekennzeichnet, daß** die innere Schicht Homopolyamide enthält, welche aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

7. Schlauchfolie nach einem der Ansprüche 1 bis 6, **dadurch gekennzeichnet, daß** die innere Schicht modifizierte Polyolefine enthält, die Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, sind.

8. Schlauchfolie nach den Ansprüchen 1 bis 7, **dadurch gekennzeichnet, daß** die in der inneren Schicht enthaltenen weiteren Komponenten, amorphes Polyamid, Homopolyamid und modifiziertes Polyolefin, in Mengen von jeweils 1 bis 30 Gew.%, bevorzugt 5 bis 25 Gew.%, bezogen auf die gesamte Innenschicht, zugemischt sein können.

9. Schlauchfolie nach einem der Ansprüche 1 bis 8, **dadurch gekennzeichnet, daß** die der inneren Schicht benachbarte Schicht aus modifizierten Polyolefinen oder einer Mischung von modifizierten Polyolefinen besteht.

10. Schlauchfolie nach Anspruch 9, **dadurch gekennzeichnet, daß** die modifizierten Polyolefine modifizierte Homo- oder Copolymere des Ethylens und/oder Propylens und gegebenenfalls weiteren linearen Alphaolefinen mit 3 bis 8 C-Atomen, die Monomere aus der Gruppe der Alpha-Beta-ungesättigten Dicarbonsäuren, wie Maleinsäure, Fumarsäure, Itaconsäure oder deren Säureanhydride, Säureester, Säureamide oder Säureimide aufgepfropft enthalten, sind.

11. Schlauchfolie nach Anspruch 9, **dadurch gekennzeichnet, daß** die modifizierten Polyolefine Copolymerisate von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, sind.

12. Schlauchfolie nach einem der Ansprüche 1 bis 11, **dadurch gekennzeichnet, daß** die Mittelschicht aus wenigstens einem Homopolyamid und/oder wenigstens einem Copolyamid besteht, welche aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

13. Schlauchfolie nach Anspruch 12, **dadurch gekennzeichnet, daß** die Mittelschicht zusätzlich zu Homopolyamid und/oder Copolyamid ein modifiziertes Polyolefin enthält, das durch Copolymerisation von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, hergestellt ist.

14. Schlauchfolie nach Anspruch 12, **dadurch gekennzeichnet, daß** die Mittelschicht zusätzlich zu Homopolyamid und/oder Copolyamid ein Copolymer aus Ethylenvinylalkohol enthält, wobei der Ethylen-Anteil im Ethylenvinylalkohol-Copolymeren zwischen 27 und 48 Mol%, bevorzugt zwischen 27 und 38 Mol% beträgt.

15. Schlauchfolie nach den Ansprüchen 12 bis 14, **dadurch gekennzeichnet, daß** der jeweilige Anteil an modifiziertem Polyolefin und/oder Ethylenvinylalkohol-Copolymer 0 bis 50 Gew.%, bezogen auf die gesamte Mittelschicht, beträgt.

16. Schlauchfolie nach den Ansprüchen 1 bis 15, **dadurch gekennzeichnet, daß** zwischen Mittel- und Außenschicht eine Schicht aus wenigstens einem Copolymeren von Ethylenvinylalkohol angeordnet ist.

17. Schlauchfolie nach Anspruch 16, **dadurch gekennzeichnet, daß** der Ethylen-Anteil im Ethylenvinylalkohol-Copolymeren zwischen 27 und 48 Mol%, bevorzugt zwischen 34 und 48 Mol% beträgt.

18. Schlauchfolie nach den Ansprüchen 16 und 17, **dadurch gekennzeichnet, daß** die zwischen Mittel- und Außenschicht angeordnete Schicht zusätzlich zu Ethylenvinylalkohol-Copolymeren Homopolyamide und/oder Copolyamide und/oder modifizierte Polyolefine enthält.

19. Schlauchfolie nach Anspruch 18, **dadurch gekennzeichnet, daß** die Homo- und Copolyamide aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

20. Schlauchfolie nach Anspruch 18, **dadurch gekennzeichnet, daß** die modifizierten Polyolefine durch Copolymerisation von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, hergestellt sind.

21. Schlauchfolie nach Anspruch 18, **dadurch gekennzeichnet, daß** der Anteil an Homopolyamid und/oder Copolyamid und/oder modifiziertem Polyolefin 0 bis 40 Gew.%, bezogen auf die gesamte Schicht, beträgt.

22. Schlauchfolie nach den Ansprüchen 1 bis 21, **dadurch gekennzeichnet, daß** die Außenschicht wenigstens ein Polyolefin und/oder wenigstens ein modifiziertes Polyolefin enthält.

23. Schlauchfolie nach Anspruch 22, **dadurch gekennzeichnet, daß** die Polyolefine der Außenschicht vorzugsweise aus linearem Polyethylen niedriger Dichte, Polyethylen hoher Dichte, Polypropylen-Homopolymerisaten, Polypropylen-Block- und Polypropylen-Random-Copolymerisaten bestehen.

24. Schlauchfolie nach Anspruch 22, **dadurch gekennzeichnet, daß** die modifizierten Polyolefine der Außenschicht durch Copolymerisation von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, hergestellt sind.

25. Schlauchfolie nach Anspruch 22, **dadurch gekennzeichnet, daß** die modifizierten Polyolefine der Außenschicht modifizierte Homo- oder Copolymere des Ethylens und/oder Propylens und gegebenenfalls weiteren linearen Alphaolefinen mit 3 bis 8 C-Atomen, die Monomere aus der Gruppe der Alpha-Beta-ungesättigten Dicarbonsäuren, wie Maleinsäure, Fumarsäure, Itaconsäure oder deren Säureanhydride, Säureester, Säureamide oder Säureimide aufgepfropft enthalten, sind.

26. Schlauchfolie nach einem der Ansprüche 1 bis 25, **dadurch gekennzeichnet, daß** sie aus einer coextrudierten und biaxial verstreckten Schlauchfolie besteht, welche thermofixiert ist.

27. Schlauchfolie nach einem der Ansprüche 1 bis 26, **dadurch gekennzeichnet, daß** ihre Wandstärke 30 bis 100, vorzugsweise 40 bis 80, µm beträgt.

28. Verwendung einer Schlauchfolie nach einem der Ansprüche 1 bis 27 zur Verpackung von pastösen Lebensmitteln, Fleisch oder Fleisch mit Knochen.

29. Beutel, **dadurch gekennzeichnet, daß** er aus einer Schlauchfolie nach einem der Ansprüche 1 bis 27 durch Verschweißen oder Siegeln der Innenschicht mit sich selbst hergestellt ist.

30. Verwendung eines nach Anspruch 29 hergestellten Beutels zur Verpackung von pastösen Lebensmitteln, Fleisch oder Fleisch mit Knochen.

## Claims

1. A five-layered, biaxially oriented, shrinkable, sealable tubular film for the packaging and wrapping of paste-like foodstuffs, meat, or meat with bones, **characterized in that** the tubular film is constituted of an inner layer comprised of at least one copolyamide and at least one amorphous polyamide and/or at least one homopolyamide and/or at least one modified polyolefin, a layer of a modified polyolefin, a middle layer comprised of at least one homopolyamide and/or at least one copolyamide and/or at least one copolymer of ethylene and vinyl alcohol and/or a modified polyolefin, a layer comprised of at least one ethylene-vinyl alcohol copolymer, and an outer layer comprised of at least one polyolefin and/or at least one modified polyolefin.

2. The tubular film according to claim 1, **characterized in that** the inner layer includes copolyamides produced from monomers selected from the group of caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, and xylylenediamine.

3. The tubular film according to claim 2, **characterized in that** the copolyamides in the inner layer are present in amounts of from 50 to 95 wt.-%.

4. The tubular film according to any of claims 1 to 3, **characterized in that** the inner layer includes amorphous polyamides having a glass transition temperature between 50 and 200°C in dry state.

5. The tubular film according to claim 4, **characterized in that** the glass transition temperature of the amorphous polyamides is preferably between 90 and 160°C.

6. The tubular film according to any of claims 1 to 5, **characterized in that** the inner layer includes homopolyamides produced from monomers selected from the group of caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, and xylylenediamine.

7. The tubular film according to any of claims 1 to 6, **characterized in that** the inner layer includes modified polyolefins, which polyolefins are copolymers of ethylene or propylene and optionally other linear α-olefins having from 3 to 8 C atoms and α,β-unsaturated carboxylic acids, preferably acrylic acid, methacrylic acid and/or metal salts and/or alkyl esters thereof, or appropriate graft copolymers of the above-mentioned monomers on polyolefins, or partially saponified ethylene-vinyl acetate copolymers which are optionally graft-polymerized with an α,β-unsaturated carboxylic acid and have a low saponification level, or mixtures thereof.

8. The tubular film according to claims 1 to 7, **characterized in that** each of the other components included in the inner layer, amorphous polyamide, homopolyamide and modified polyolefin, can be admixed in amounts of from 1 to 30 wt.-%, preferably from 5 to 25 wt.-%, relative to the overall inner layer.

9. The tubular film according to any of claims 1 to 8, **characterized in that** the layer adjacent to the inner layer consists of modified polyolefins or of a mixture of modified polyolefins.

10. The tubular film according to claim 9, **characterized in that** the modified polyolefins are modified homo- or copolymers of ethylene and/or propylene and optionally other linear α-olefins having from 3 to 8 C atoms, which have monomers from the group of α,β-unsaturated dicarboxylic acids such as maleic acid, fumaric acid, itaconic acid, or anhydrides, esters, amides or imides thereof grafted thereon.

11. The tubular film according to claim 9, **characterized in that** the modified polyolefins are copolymers of ethylene or propylene and optionally other linear α-olefins having from 3 to 8 C atoms and α,β-unsaturated carboxylic acids such as acrylic acid, methacrylic acid and/or metal salts and/or alkyl esters thereof, or appropriate graft copolymers of the above-mentioned monomers on polyolefins, or partially saponified ethylene-vinyl acetate copolymers which are optionally graft-polymerized with an α,β-unsaturated carboxylic acid and have a low saponification level, or mixtures thereof.

12. The tubular film according to any of claims 1 to 11, **characterized in that** the middle layer consists of at least one homopolyamide and/or at least one copolyamide produced from monomers selected from the group of caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, and xylylenediamine.

13. The tubular film according to claim 12, **characterized in that** the middle layer, in addition to homopolyamide and/or copolyamide, includes a modified polyolefin produced by copolymerization of ethylene or propylene and optionally other linear α-olefins having from 3 to 8 C atoms and α,β-unsaturated carboxylic acids such as acrylic acid, methacrylic acid and/or metal salts and/or alkyl esters thereof, or appropriate graft copolymers of the above-mentioned monomers on polyolefins, or partially saponified ethylene-vinyl acetate copolymers which are optionally graft-polymerized with an α,β-unsaturated carboxylic acid and have a low saponification level, or mixtures thereof.

14. The tubular film according to claim 12, **characterized in that** the middle layer, in addition to homopolyamide and/or copolyamide, includes a copolymer of ethylene-vinyl alcohol, the amount of ethylene in the ethylene vinyl alcohol copolymer being between 27 and 48 mole-%, preferably between 27 and 38 mole-%.

15. The tubular film according to claims 12 to 14, **characterized in that** the amount of each modified polyolefin and/or ethylene-vinyl alcohol copolymer is from 0 to 50 wt.-%, relative to the overall middle layer.

16. The tubular film according to claims 1 to 15, **characterized in that** a layer comprised of at least one ethylene-vinyl alcohol copolymer is arranged between the middle layer and outer layer.

17. The tubular film according to claim 16, **characterized in that** the amount of ethylene in said ethylene-vinyl alcohol copolymer is between 27 and 48 mole-%, preferably between 34 and 48 mole-%.

18. The tubular film according to claims 16 and 17, **characterized in that** the layer arranged between the middle layer and outer layer includes homopolyamides and/or copolyamides and/or modified polyolefins in addition to ethylene-vinyl alcohol copolymers.

19. The tubular film according to claim 18, **characterized in that** the homo- and copolyamides are produced from monomers selected from the group of caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, and xylylenediamine.

20. The tubular film according to claim 18, **characterized in that** the modified polyolefins are produced by copolymerization of ethylene or propylene and optionally other linear α-olefins having from 3 to 8 C atoms and α,β-unsaturated carboxylic acids such as acrylic acid, methacrylic acid and/or metal salts and/or alkyl esters thereof, or appropriate graft copolymers of the above-mentioned monomers on polyolefins, or partially saponified ethylene-vinyl acetate copolymers which are optionally graft-polymerized with an α,β-unsaturated carboxylic acid and have a low saponification level, or mixtures thereof.

21. The tubular film according to claim 18, **characterized in that** the amount of homopolyamide and/or copolyamide and/or modified polyolefin is from 0 to 40 wt.-%, relative to the overall layer.

22. The tubular film according to claims 1 to 21, **characterized in that** the outer layer includes at least one polyolefin and/or at least one modified polyolefin.

23. The tubular film according to claim 22, **characterized in that** the polyolefins of the outer layer are preferably comprised of linear low-density polyethylene, high-density polyethylene, polypropylene homopolymers, polypropylene block copolymers and polypropylene random copolymers.

24. The tubular film according to claim 22, **characterized in that** the modified polyolefins of the outer layer are produced by copolymerization of ethylene or propylene and optionally other linear α-olefins having from 3 to 8 C atoms and α,β-unsaturated carboxylic acids such as acrylic acid, methacrylic acid and/or metal salts and/or alkyl esters thereof, or appropriate graft copolymers of the above-mentioned monomers on polyolefins, or partially saponified ethylene-vinyl acetate copolymers which are optionally graft-polymerized with an α,β-unsaturated carboxylic acid and have a low saponification level, or mixtures thereof.

25. The tubular film according to claim 22, **characterized in that** the modified polyolefins of the outer layer are modified homo- or copolymers of ethylene and/or propylene and optionally other linear α-olefins having from 3 to 8 C atoms, which have monomers from the group of α,β-unsaturated dicarboxylic acids such as maleic acid, fumaric acid, itaconic acid, or anhydrides, esters, amides or imides thereof grafted thereon.

26. The tubular film according to any of claims 1 to 25, **characterized in that** the tubular film consists of a coextruded and biaxially stretched tubular film which has been subjected to heat-setting.

27. The tubular film according to any of claims 1 to 26, **characterized in that** the wall thickness thereof is from 30 to 100, preferably from 40 to 80 µm.

28. The tubular film according to any of claims 1 to 27 for the packaging of paste-like foodstuffs, meat, or meat with bones.

29. A bag, **characterized in that** the bag is produced from a tubular film according to any of claims 1 to 27 by welding or sealing of the inner layer on itself.

30. Use of a bag produced according to claim 29 for the packaging of paste-like foodstuffs, meat, or meat with bones.

## Revendications

1. Film tubulaire à cinq couches, étiré biaxialement, thermorétractable, soudable, utilisé pour emballer et envelopper des aliments pâteux, de la viande ou de la viande avec os, **caractérisé en ce qu'**il est constitué d'une couche intérieure composée d'au moins un copolyamide et d'au moins un polyamide amorphe et/ou d'au moins un homopolyamide et/ou d'au moins une polyoléfine modifiée, d'une couche d'une polyoléfine modifiée, d'une couche médiane composée d'au moins un homopolyamide et/ou d'au moins un copolyamide et/ou d'au moins un copolymère d'éthylène avec de l'alcool vinylique et/ou d'une polyoléfine modifiée, d'une couche composée d'au moins un copolymère éthylène-alcool vinylique et d'une couche extérieure constituée d'au moins une polyoléfine et/ou d'au moins une polyoléfine modifiée.

2. Film tubulaire selon la revendication 1, **caractérisé en ce que** la couche intérieure contient des copolyamides qui sont préparés à partir de monomères qui sont choisis parmi le groupe des caprolactame, laurolactame, acide oméga-amino-undécanoïque, acide adipique, acide azélaïque, acide sébacique, acide décanedicarboxylique, acide dodécanedicarboxylique, acide téréphtalique, acide isophtalique, tétraméthylènediamine, pentaméthylènediamine, hexaméthylènediamine, octaméthylènediamine et xylylènediamine.

3. Film tubulaire selon la revendication 2, **caractérisé en ce que** les copolyamides dans la couche intérieure sont présents en quantités de 50 à 95 % en poids.

4. Film tubulaire selon l'une quelconque des revendications 1 à 3, **caractérisé en ce que** la couche intérieure contient des polyamides amorphes dont la température de transition vitreuse à l'état sec se situe entre 50 et 200°C.

5. Film tubulaire selon la revendication 4, **caractérisé en ce que** la température de transition vitreuse des polyamides amorphes se situe de préférence entre 90 et 160°C.

6. Film tubulaire selon l'une quelconque des revendications 1 à 5, **caractérisé en ce que** la couche intérieure contient des homopolyamides qui sont préparés à partir de monomères qui sont choisis parmi le groupe des caprolactame, laurolactame, acide oméga-amino-undécanoïque, acide adipique, acide azélaïque, acide sébacique, acide décanedicarboxylique, acide dodécanedicarboxylique, acide téréphtalique, acide isophtalique, tétraméthylènediamine, pentaméthylènediamine, hexaméthylènediamine, octaméthylènediamine et xylylènediamine.

7. Film tubulaire selon l'une quelconque des revendications 1 à 6, **caractérisé en ce que** la couche intérieure contient des polyoléfines modifiées qui sont des copolymères d'éthylène ou de propylène et éventuellement d'autres alpha-oléfines linéaires comportant de 3 à 8 atomes de carbone avec des acides carboxyliques bêta-insaturés, de préférence de l'acide acrylique, de l'acide méthacrylique et/ou leurs sels métalliques et/ou leurs esters alkyliques ou des copolymères greffés appropriés des monomères cités sur des polyoléfines ou des copolymères éthylène/acétate de vinyle partiellement saponifiés qui sont éventuellement polymérisés par greffage avec un acide carboxylique alpha-bêta-insaturé et présentent un faible degré de saponification, ou leurs mélanges.

8. Film tubulaire selon les revendications 1 à 7, **caractérisé en ce que** les autres composants contenus dans la couche intérieure, le polyamide amorphe, l'homopolyamide et la polyoléfine modifiée peuvent être mélangés en quantités de respectivement 1 à 30 % en poids, de préférence 5 à 25 % en poids, par rapport à la couche intérieure totale.

9. Film tubulaire selon les revendications 1 à 8, **caractérisé en ce que** la couche adjacente à la couche intérieure est constituée de polyoléfines modifiées ou d'un mélange de polyoléfines modifiées.

10. Film tubulaire selon la revendication 9, **caractérisé en ce que** les polyoléfines modifiées sont des homopolymères ou copolymères d'éthylène et/ou de propylène et éventuellement d'autres alpha-oléfines linéaires comportant de 3 à 8 atomes de carbone, qui contiennent sous forme greffée des monomères du groupe des acides dicarboxyliques alpha-bêta-insaturés, comme l'acide maléique, l'acide fumarique, l'acide itaconique, ou leurs anhydrides d'acide, esters d'acide, amides d'acide ou imides d'acide.

11. Film tubulaire selon la revendication 9, **caractérisé en ce que** les polyoléfines modifiées sont des copolymères d'éthylène ou de propylène et éventuellement d'autres alpha-oléfines linéaires comportant de 3 à 8 atomes de carbone avec des acides carboxyliques alpha-bêta-insaturés, comme l'acide acrylique, l'acide méthacrylique et/ou leurs sels métalliques et/ou leurs esters alkyliques ou des copolymères greffés appropriés des monomères cités sur des polyoléfines ou des copolymères éthylène/acétate de vinyle partiellement saponifiés qui sont éventuellement polymérisés par greffage avec un acide carboxylique alpha-bêta-insaturé et présentent un faible degré de saponification, ou leurs mélanges.

12. Film tubulaire selon l'une quelconque des revendications 1 à 11, **caractérisé en ce que** la couche médiane est constituée d'au moins un homopolyamide et/ou d'au moins un copolyamide, qui sont préparés à partir de monomères qui sont choisis parmi le groupe des caprolactame, laurolactame, acide oméga-amino-undécanoïque, acide adipique, acide azélaïque, acide sébacique, acide décanedicarboxylique, acide dodécanedicarboxylique, acide téréphtalique, acide isophtalique, tétraméthylènediamine, pentaméthylènediamine, hexaméthylènediamine, octaméthylènediamine et xylylènediamine.

13. Film tubulaire selon la revendication 12, **caractérisé en ce que** la couche médiane contient, en plus de l'homopolyamide et/ou du copolyamide, une polyoléfine modifiée qui est préparée par copolymérisation d'éthylène ou de propylène et éventuellement d'autres alpha-oléfines linéaires comportant de 3 à 8 atomes de carbone avec des acides carboxyliques alpha-bêta-insaturés, comme l'acide acrylique, l'acide méthacrylique et/ou leurs sels métalliques et/ou leurs esters alkyliques ou des copolymères greffés appropriés des monomères cités sur des polyoléfines ou des copolymères éthylène/acétate de vinyle partiellement saponifiés qui sont éventuellement polymérisés par greffage avec un acide carboxylique alpha-bêta-insaturé et présentent un faible degré de saponification, ou leurs mélanges.

14. Film tubulaire selon la revendication 12, **caractérisé en ce que** la couche médiane contient, en plus de l'homopolyamide et/ou du copolyamide, un copolymère éthylène-alcool vinylique, la part d'éthylène dans le copolymère éthylène-alcool vinylique étant comprise entre 27 et 48 % en moles, de préférence entre 27 et 38 % en moles.

15. Film tubulaire selon les revendications 12 à 14, **caractérisé en ce que** la part respective de polyoléfine modifiée et/ou de copolymère éthylène-alcool vinylique est de 0 à 50 % en poids, par rapport à la couche médiane totale.

16. Film tubulaire selon les revendications 1 à 15, **caractérisé en ce qu'**une couche constituée d'au moins un copolymère éthylène-alcool vinylique est disposée entre la couche médiane et la couche extérieure.

17. Film tubulaire selon la revendication 16, **caractérisé en ce que** la part d'éthylène dans le copolymère éthylène-alcool vinylique est comprise entre 27 et 48 % en moles, de préférence entre 34 et 48 % en moles.

18. Film tubulaire selon les revendications 16 et 17, **caractérisé en ce que** la couche disposée entre la couche médiane et la couche extérieure contient, en plus des copolymères éthylène-alcool vinylique, des homopolyamides et/ou des copolyamides et/ou des polyoléfines modifiées.

19. Film tubulaire selon la revendication 18, **caractérisé en ce que** les homopolyamides et copolyamides sont préparés à partir de monomères qui sont choisis parmi le groupe des caprolactame, laurolactame, acide oméga-amino-undécanoïque, acide adipique, acide azélaïque, acide sébacique, acide décanedicarboxylique, acide dodécanedicarboxylique, acide téréphtalique, acide isophtalique, tétraméthylènediamine, pentaméthylènediamine, hexaméthylènediamine, octaméthylènediamine et xylylènediamine.

20. Film tubulaire selon la revendication 18, **caractérisé en ce que** les polyoléfines modifiées sont préparées par copolymérisation d'éthylène ou de propylène et éventuellement d'autres alpha-oléfines linéaires comportant de 3 à 8 atomes de carbone avec des acides carboxyliques alpha-bêta-insaturés, comme l'acide acrylique, l'acide méthacrylique et/ou leurs sels métalliques et/ou leurs esters alkyliques ou des copolymères greffés appropriés des monomères cités sur des polyoléfines ou des copolymères éthylène/acétate de vinyle partiellement saponifiés qui sont éventuellement polymérisés par greffage avec un acide carboxylique alpha-bêta-insaturé et présentent un faible degré de saponification, ou leurs mélanges.

21. Film tubulaire selon la revendication 18, **caractérisé en ce que** la part d'homopolyamide et/ou de copolyamide et/ou de polyoléfine modifiée est de 0 à 40 % en poids, par rapport à la couche totale.

22. Film tubulaire selon les revendications 1 à 21, **caractérisé en ce que** la couche extérieure contient au moins une polyoléfine et/ou au moins une polyoléfine modifiée.

23. Film tubulaire selon la revendication 22, **caractérisé en ce que** les polyoléfines de la couche extérieure sont constituées de préférence de polyéthylène linéaire basse densité, de polyéthylène haute densité, d'homopolymères de polypropylène, de copolymères séquences de polypropylène et statistiques de polypropylène.

24. Film tubulaire selon la revendication 22, **caractérisé en ce que** les polyoléfines modifiées de la couche extérieure sont préparées par copolymérisation d'éthylène ou de propylène et éventuellement d'autres alpha-oléfines linéaires comportant de 3 à 8 atomes de carbone avec des acides carboxyliques alpha-bêta-insaturés, comme l'acide acrylique, l'acide méthacrylique et/ou leurs sels métalliques et/ou leurs esters alkyliques ou des copolymères greffés appropriés des monomères cités sur des polyoléfines ou des copolymères éthylène/acétate de vinyle partiellement saponifiés qui sont éventuellement polymérisés par greffage avec un acide carboxylique alpha-bêta-insaturé et présentent un faible degré de saponification, ou leurs mélanges.

25. Film tubulaire selon la revendication 22, **caractérisé en ce que** les polyoléfines modifiées de la couche extérieure sont des homopolymères ou copolymères d'éthylène et/ou de propylène et éventuellement d'autres alpha-oléfines linéaires comportant de 3 à 8 atomes de carbone, qui contiennent sous forme greffée des monomères du groupe des acides dicarboxyliques alpha-bêta-insaturés, comme l'acide maléique, l'acide fumarique, l'acide itaconique, ou leurs anhydrides d'acide, esters d'acide, amides d'acide ou imides d'acide.

26. Film tubulaire selon l'une quelconque des revendications 1 à 25, **caractérisé en ce qu'**il est constitué d'un film tubulaire coextrudé et étiré biaxialement, qui est thermofixé.

27. Film tubulaire selon l'une quelconque des revendications 1 à 26, **caractérisé en ce que** son épaisseur pariétale est de 30 à 100, de préférence de 40 à 80 µm.

28. Utilisation d'un film tubulaire selon l'une quelconque des revendications 1 à 27 pour emballer des aliments pâteux, de la viande et de la viande avec os.

29. Sachet, **caractérisé en ce qu'**il est fabriqué à partir d'un film tubulaire selon l'une quelconque des revendications 1 à 27 par soudage ou scellement de la couche intérieure avec elle-même.

30. Utilisation d'un sachet fabriqué selon la revendication 29 pour emballer des aliments pâteux, de la viande et de la viande avec os.
